# EUROPÄISCHE PATENTSCHRIFT

(11) **EP 3 748 309 B1**
(45) Veröffentlichungstag und Bekanntmachung des Hinweises auf die Patenterteilung: **18.02.2026**
(21) Anmeldenummer: 19179102.9
(22) Anmeldetag: 07.06.2019
(51) Int. Cl.: G01F 1/66, G01F 1/667, F16K 37/00, G01F 15/00

(54) **ULTRASCHALLDURCHFLUSSMESSGERÄT, VERWENDUNG EINES ULTRASCHALLDURCHFLUSSMESSGERÄTES IN EINEM ABSPERRORGAN UND ABSPERRORGAN**
ULTRASOUND FLOW MEASURING DEVICE, BLOCKING DEVICE AND USE IN A BLOCKING DEVICE
DÉBITMÈTRE À ULTRASONS, UTILISATION D'UN DÉBITMÈTRE À ULTRASONS DANS UN ORGANE D'ARRÊT ET ORGANE D'ARRÊT

(43) Veröffentlichungstag der Anmeldung: 09.12.2020
(73) Patentinhaber: FOCUS-ON V.O.F., 3313 LC Dordrecht (NL)
(72) Erfinder: Boer, Adriaan Hendrik, 3363 CN Sliedrecht (NL); Bhangu, Kavreet, 83052 Bruckmühl (DE); Van Klooster, Jeroen Martin, 4005 GN Tiel (NL)
(74) Vertreter: Gesthuysen Patentanwälte

(56) Entgegenhaltungen:
- EP-B1- 2 872 781
- US-A1- 2006 288 798
- US-A1- 2012 090 702
- US-A1- 2018 321 067

## Beschreibung

Die Erfindung geht aus von einem Ultraschalldurchflussmessgerät mit wenigstens einem Messrohr, mit wenigstens einem ersten Ultraschallwandlerpaar umfassend einen ersten Ultraschallwandler und einen zweiten Ultraschallwandler und mit wenigstens einem zweiten Ultraschallwandlerpaar umfassend einen dritten Ultraschallwandler und einen vierten Ultraschallwandler, wobei jeder Ultraschallwandler als Ultraschallsender und/oder als Ultraschallempfänger ausgestaltet ist,
wobei das erste Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem ersten Ultraschallwandler und dem zweiten Ultraschallwandler einen ersten Signalpfad definiert, wobei der erste Signalpfad eine erste Messebene definiert,
wobei das zweite Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem dritten Ultraschallwandler und dem vierten Ultraschallwandler einen zweiten Signalpfad definiert, wobei der zweite Signalpfad eine zweite Messebene definiert,
wobei das Messrohr wenigstens eine Messrohrquerschnittsfläche und eine Messrohrachse aufweist und
wobei das Messrohr eine erste Messrohrhälfte und eine zweite Messrohrhälfte aufweist.

Darüber hinaus betrifft die Erfindung die Verwendung eines Ultraschalldurchflussmessgerätes in einem Absperrorgan, wobei das Absperrorgan einen Strömungskanal und eine in dem Strömungskanal angeordnete Sperrvorrichtung aufweist, wobei die Sperrvorrichtung eine Sperrkörperaufnahme und einen in der Sperrkörperaufnahme beweglichen Sperrkörper aufweist, wobei durch Bewegen des Sperrkörpers in der Sperrkörperaufnahme der Strömungsquerschnitt für das Medium in der Sperrvorrichtung und damit im Strömungskanal veränderbar ist, wobei der Strömungskanal in Strömungsrichtung gesehen vor der Sperrvorrichtung einen Einlaufbereich aufweist.

Zudem betrifft die Erfindung ebenfalls ein Absperrorgan mit einem Ultraschalldurchflussmessgerät, wobei das Absperrorgan einen Strömungskanal und eine in dem Strömungskanal angeordnete Sperrvorrichtung aufweist, wobei die Sperrvorrichtung eine Sperrkörperaufnahme und einen in der Sperrkörperaufnahme beweglichen Sperrkörper aufweist, wobei durch Bewegen des Sperrkörpers in der Sperrkörperaufnahme der Strömungsquerschnitt für das Medium in der Sperrvorrichtung und damit im Strömungskanal veränderbar ist, wobei der Strömungskanal in Strömungsrichtung gesehen vor der Sperrvorrichtung einen Einlaufbereich aufweist.

Die Messung des Durchflusses eines durch ein Messrohr strömenden Mediums mit einem Ultraschalldurchflussmessgerät ist aus dem Stand der Technik bekannt. Ultraschalldurchflussmessgeräte weisen in der Regel ein Messrohr und wenigstens zwei als Ultraschallsender und/oder Ultraschallempfänger ausgestaltete Ultraschallwandler auf, die in Strömungsrichtung (axial bezogen auf die Messrohrachse) voneinander beabstandet an dem Messrohr angeordnet sind. Zur Messung des Durchflusses wird ein Ultraschallsignal entlang des Signalpfades zwischen den Ultraschallwandlern sowohl in Strömungsrichtung als auch entgegengesetzt zur Strömungsrichtung ausgesendet. Aufgrund des Mitführeffektes ergibt sich eine unterschiedliche Laufzeit von den Signalen, die sich entlang eines Signalpfades mit bzw. entgegen der Strömung bewegen. Aus dem Laufzeitunterschied wird die Strömungsgeschwindigkeit und unter Berücksichtigung des Messrohrquerschnittes der Volumendurchfluss bestimmt.

Bekannt sind ebenfalls Ultraschalldurchflussmessgeräte, die mehr als ein Ultraschallwandlerpaar aufweisen, sodass zur Bestimmung des Durchflusses zwei oder mehr Signalpfade ausgewertet werden können.

Beispielsweise offenbart die Druckschrift DE 10 2007 004 936 B4 ein Ultraschalldurchflussmessgerät mit wenigstens zwei Ultraschallwandlerpaaren, wobei die Ultraschallwandler eines jeden Ultraschallwandlerpaares auf einer gemeinsamen Messrohrhälfte in Längsrichtung des Messrohrs versetzt zueinander angeordnet sind und der dem jeweiligen Ultraschallwandlerpaar zugeordnete Ultraschallreflektor auf der anderen Messrohrhälfte in Längsrichtung des Messrohrs gesehen zwischen den beiden Ultraschallwandlern angeordnet ist, sodass ein von einem Ultraschallwandler eines Ultraschallwandlerpaares ausgesandtes Ultraschallsignal entlang eines V-förmigen Signalpfads über den dem Ultraschallwandlerpaar zugeordneten Ultraschallreflektor zu dem anderen Ultraschallwandler des Ultraschallwandlerpaares gelangt, wobei das erste Ultraschallwandlerpaar und der zweite Ultraschallreflektor auf der einen Umfangshälfte und das zweite Ultraschallwandlerpaar und der erste Ultraschallreflektor auf der anderen Umfangshälfte angeordnet sind. Dabei sind die Ultraschallwandlerpaare derart angeordnet, dass die durch die einzelnen Signalpfade aufgespannten Messebenen parallel zueinander verlaufen.

Zudem ist aus der Druckschrift DE 10 2013 218 827 A1 bekannt, Ultraschalldurchflussmessgeräte zur Durchflussmessung am oder in dem Gehäuse eines Absperrorgans vorzusehen, sodass eine Regelung des Volumen- oder Massestroms basierend auf dem gemessenen Durchfluss erfolgen kann.

Zudem ist aus den Dokumenten US 2006 288 798 A1 und US 2018 321 067 A1 jeweils ein Ultraschalldurchflussmessgerät mit einer Mehrzahl von Ultraschallwandlern bekannt, wobei jeweils zwei Ultraschallwandler zwischen sich einen Messpfad definieren, sodass zur Verbesserung der Genauigkeit der Bestimmung der Geschwindigkeit eines strömenden Mediums, das Medium in unterschiedlichen Bereichen vermessen werden kann..

Insbesondere in Absperrorganen aber auch in anderen Anwendungsbereichen besteht häufig das Problem, dass Biegungen oder Querschnittsveränderungen des Messrohrs Unregelmäßigkeiten im Strömungsprofil verursachen, die an der Messstelle zu Ungenauigkeiten der Durchflussmessung führen. Im Detail erzeugen beispielsweise im zu vermessenden strömenden Medium vorhandene Wirbel radiale und tangentiale Geschwindigkeitskomponenten, die die Messung der Geschwindigkeit des strömenden Mediums verfälschen. Problematisch ist insbesondere, wenn die Messstelle kurz vor oder hinter oder im Verlauf von solchen, eine Störung des Strömungsprofils verursachenden Bereichen, angeordnet ist.

Ausgehend von dem dargelegten Stand der Technik ist es daher Aufgabe der Erfindung ein Ultraschalldurchflussmessgerät anzugeben, dass auch in kritischen Anwendungsbereichen eine besonders zuverlässige Durchflussmessung erlaubt. Zudem ist es Aufgabe der Erfindung die Verwendung eines solchen Durchflussmessgerätes in einem Absperrorgan und ein entsprechendes Absperrorgan anzugeben.

Gemäß einer ersten Lehre der vorliegenden Erfindung wird die zuvor dargelegte Aufgabe durch ein eingangs genanntes Ultraschalldurchflussmessgerät dadurch gelöst, dass das Messrohr im Verlauf des ersten Signalpfades und des zweiten Signalpfades eine Änderung der Form und/oder der Größe der Messrohrquerschnittsfläche aufweist,
dass der erste Ultraschallwandler auf der ersten Messrohrhälfte angeordnet ist und dass der dritte Ultraschallwandler auf der zweiten Messrohrhälfte angeordnet ist,
dass das erste Ultraschallwandlerpaar und das zweite Ultraschallwandlerpaar derart an dem Messrohr angeordnet sind, dass die erste Messebene und die zweite Messebene nicht parallel zueinander ausgerichtet sind.

Es wurde erkannt, dass durch die erfindungsgemäße Anordnung der Ultraschallwandlerpaare ein strömendes Medium auch in Bereichen, in denen sich die Form und/oder die Größe des Messrohrquerschnittes ändert, wodurch die Durchflussmessung störende Verwirbelungen auftreten, besonders zuverlässig vermessen werden kann.

Fehler verursachende radiale oder tangentiale Geschwindigkeitskomponenten können dadurch besonders vorteilhaft herausgefiltert werden, dass ein erstes Ultraschallsignal entlang des ersten Signalpfades und ein zweites Ultraschallsignal entlang des zweiten Signalpfades aus unterschiedlichen Richtungen, vorzugsweise unter im Wesentlichen gleichgroßen, jedoch entgegengesetzten Winkeln in Bezug auf die Messrohrachse, in das Medium gesendet werden. Hierzu ist der erste Ultraschallwandler auf der ersten Messrohrhälfte angeordnet und der dritte Ultraschallwandler ist auf der zweiten Messrohrhälfte angeordnet.

Die erste Messrohrhälfte und die zweite Messrohrhälfte werden jeweils gebildet aus einer sich in Längsrichtung des Messrohrs erstreckenden ersten und einer zweiten Umfangshälfte.

Zudem sind die einzelnen Ultraschallwandler derart ausgerichtet, dass die durch den ersten Signalpfad definierte erste Messebene und die durch den zweiten Signalpfad definierte zweite Messebene nicht parallel zueinander verlaufen, sodass im Verlauf der Messrohrachse sich der Abstand der ersten Messebene und der zweiten Messebene zumindest abschnittsweise verkleinert und/oder sodass sich der Abstand zumindest abschnittsweise im Verlauf der Messrohrachse vergrößert. Erfindungsgemäß wird insofern die Anordnung der Ultraschallwandler an die Änderung des Messrohrs im Verlauf der Messstrecke angepasst, vorzugsweise derart, dass in Bezug auf das Strömungsprofil im Betrieb die Bereiche erfasst werden, in denen entstehende Verwirbelungen nur geringe Auswirkungen zeigen und weiterhin die Bestimmung der Geschwindigkeit eines turbulenten bzw. laminaren Strömungsprofils einen möglichst geringen Fehler aufweist.

Gemäß einer besonders bevorzugten Ausgestaltung definiert der erste Signalpfad genau eine erste Messebene und der zweite Signalpfad definiert genau eine zweite Messebene.

In vorteilhafter Weise sind das erste Ultraschallwandlerpaar und das zweite Ultraschallwandlerpaar innerhalb desselben Messrohrabschnittes angeordnet, wodurch eine besonders platzsparende Anordnung gewährleistet wird.

Weiterhin weist das Ultraschalldurchflussmessgerät eine Steuer- und Auswerteeinheit auf, die den Durchfluss eines strömenden Mediums basierend auf wenigstens den zwei Ultraschallsignalen bestimmt.

Gemäß einer weiteren Ausgestaltung sind das erste Ultraschallwandlerpaar und das zweite Ultraschallwandlerpaar derart an dem Messrohr angeordnet, dass im Verlauf der Messstrecke zwischen den Ultraschallwandlern der Abstand der ersten Messebene zur Messrohrachse dem Abstand der zweiten Messebene zur Messrohrachse im Wesentlichen entspricht.

Damit ist vorzugsweise an jedem Punkt der Messrohrachse der Abstand der ersten Messebene zur Messrohrachse im Wesentlichen so groß wie der Abstand der zweiten Messebene zur Messrohrachse.

Erfindungsgemäß sind die Ultraschallwandler derart angeordnet, dass sich der Abstand zwischen der ersten Messebene und der zweiten Messebene im Verlauf der Messrohrachse zumindest abschnittsweise verringert. Weiter erfindungsgemäß schneiden sich die erste Messebene und die zweite Messebene im Bereich der Messstrecke zwischen den Ultraschallwandlern nicht.

Gemäß einer nächsten Ausgestaltung sind die Ultraschallwandler derart angeordnet, dass sich der Abstand zwischen der ersten Messebene und der zweiten Messebene im Verlauf der Messrohrachse zumindest abschnittsweise vergrößert.

Gemäß einer nächsten Ausgestaltung weisen der erste Signalpfad und der zweite Signalpfad wenigstens eine Reflexionsfläche auf.

Die Reflexionsfläche bzw. die Reflexionsflächen kann bzw. können sowohl durch in das Messrohr eingebrachte Reflexionselemente ausgebildet sein und/oder durch das Messrohr selbst ausgebildet sein. Je nach Ausgestaltung der Signalpfade kann die Reflexionsfläche bzw. können die Reflexionsflächen in Bezug auf die Innenwand des Messrohrs wenigstens teilweise rückversetzt sein und/oder in das Messrohrinnere hineinragen und/oder bündig mit der Messrohrinnenwand ausgebildet sein.

Erfindungsgemäß sind der erste Signalpfad und der zweite Signalpfad im Wesentlichen V-förmig ausgebildet.

Besonders bevorzugt sind das erste Ultraschallwandlerpaar und das zweite Ultraschallwandlerpaar derart angeordnet, dass der erste Signalpfad und der zweite Signalpfad, beispielsweise in Draufsicht von oben auf das Messrohr, zwei gekreuzte V-förmige Signalpfade bilden, wobei die beiden Signalpfade bzw. die Messebenen innerhalb der Messstrecke zwischen den Ultraschallwandlern einander nicht schneiden oder berühren. Hierzu sind das erste Ultraschallwandlerpaar und die Reflexionsfläche des zweiten Signalpfades auf der ersten Messrohrhälfte angeordnet und das zweite Ultraschallwandlerpaar und die Reflexionsfläche des ersten Signalpfades sind auf der zweiten Messrohrhälfte angeordnet.

Gemäß einer weiteren vorteilhaften Ausgestaltung sind das erste Ultraschallwandlerpaar und das zweite Ultraschallwandlerpaar derart angeordnet, dass der erste Signalpfad und der zweite Signalpfad das strömende Medium in einem Abstand r = 0,5R oder r > 0,3R oder r > 0,5R vermessen, wobei R der jeweilige Radius des Messrohrquerschnittes im Verlauf der Messstrecke ist. Gemäß einer Ausgestaltung kann sich dabei der Radius R im Verlauf der Messstrecke ändern.

Gemäß einer nächsten Weiterbildung ist das erste Ultraschallwandlerpaar auf der ersten Messrohrhälfte angeordnet und das zweite Ultraschallwandlerpaar ist auf der zweiten Messrohrhälfte angeordnet. Gemäß dieser Ausgestaltung können der erste Signalpfad und der zweite Signalpfad V-förmig ausgebildet sein oder auch jeweils eine Mehrzahl an Reflexionen aufweisen.

Gemäß einer weiteren Ausgestaltung weist das Messrohr im Verlauf des ersten Signalpfades und des zweiten Signalpfades eine Querschnittsreduzierung, also eine Verkleinerung der Messrohrquerschnittsfläche, auf. Besonders bevorzugt verkleinert sich die Größe der Messrohrquerschnittsfläche im Verlauf der Messstrecke zwischen den Ultraschallwandlern um wenigstens 10 % und/oder um höchstens 30 % und/oder um ungefähr 20 %

Alternativ kann das Messrohr im Verlauf des ersten Signalpfades und des zweiten Signalpfades auch eine Querschnittserweiterung, also eine Vergrößerung der Messrohrquerschnittsfläche, aufweisen.

Gemäß einer nächsten Ausgestaltung ist die Querschnittsfläche des Messrohrs im Bereich des ersten Ultraschallwandlers und des dritten Ultraschallwandlers oder vor dem ersten und dem dritten Ultraschallwandler im Wesentlichen rund ausgebildet und die Querschnittsfläche des Messrohrs im Bereich des zweiten Ultraschallwandlers und des vierten Ultraschallwandlers ist im Wesentlichen oval ausgebildet. Unter einer ovalen Ausgestaltung wird im Rahmen der vorliegenden Erfindung vorzugsweise jede rundliche konvexe Form verstanden, die im weitesten Sinne der Form eines Eis ähnelt.

Gemäß einer Ausgestaltung weist der Messrohrquerschnitt eine Höhe und eine Breite auf. Besonders bevorzugt nimmt die Höhe des Messrohrquerschnittes im Verlauf der Messstrecke zwischen den Ultraschallwandlern kontinuierlich ab und/oder die Breite des Messrohrquerschnittes nimmt im Verlauf der Messstrecke zwischen den Ultraschallwandlern kontinuierlich zu. Dabei ist vorzugsweise die Höhenabnahme größer als die Breitenzunahme.

Alternativ kann die Höhe oder die Breite des Messrohrquerschnittes im Verlauf der Messstrecke im Wesentlichen unverändert ausgebildet sein, wobei der jeweils andere, nicht unveränderliche Parameter Breite bzw. Höhe zunimmt oder abnimmt. Alternativ kann sowohl die Höhe als auch die Breite des Messrohrquerschnittes im Verlauf der Messstrecke abnehmen.

Der erste Signalpfad und der zweite Signalpfad verlaufen vorzugsweise im Bereich 0,5R oberhalb bzw. unterhalb der Messrohrachse, wobei R der jeweilige, sich im Verlauf der Messstrecke ändernde Radius ist, oder wobei R im Fall einer ovalen Form der halben Höhe des Messrohrquerschnittes entspricht. Alternativ können der erste und der zweite Signalpfad auch fortlaufend in einem gleichen Abstand zur Messrohrachse angeordnet sein, wobei der Abstand kleiner als 0,5R oder größer als 0,5R ist und wobei R der jeweilige, sich im Verlauf der Messstrecke ändernde Radius ist oder wobei R im Fall einer ovalen Form der halben Höhe des Messrohrquerschnittes entspricht

Gemäß einer weiteren Ausgestaltung weist die Messrohrquerschnittsfläche wenigstens einen ersten Kreisbogen und einen zweiten Kreisbogen auf, wobei der Radius des ersten Kreisbogens und des zweiten Kreisbogens im Verlauf der Messstrecke zwischen den Ultraschallwandlern kontinuierlich größer werden.

Vorzugsweise wird der Radius des ersten Kreisbogens schneller größer als der Radius des zweiten Kreisbogens, sodass der Messrohrquerschnitt im Bereich des ersten Kreisbogens im Verlauf der Messstrecke abflacht.

Gemäß einer nächsten Ausgestaltung entspricht der zweite Kreisbogen im Verlauf der Messstrecke zwischen den Ultraschallwandler fortlaufend im Wesentlichen einem Halbkreis.

Die Ultraschallwandler sind vorzugsweise derart an dem Messrohr angeordnet, dass der erste und der zweite Signalpfad nicht oder nicht vollständig in dem sich verbreiternden bzw. abflachenden Bereich des Messrohrs liegen. In diesen Bereichen findet ein Massentransport senkrecht zur Fließrichtung des Mediums statt, wodurch eine Wirbelbildung in diesen Bereichen gefördert wird. Durch eine Meidung dieser Bereiche kann im Betrieb die Genauigkeit der Bestimmung der Geschwindigkeit des Mediums weiter verbessert werden.

Grundsätzlich ist die Änderung der Form und/oder der Größe der Messrohrquerschnittsfläche an die jeweilige Anwendung des Ultraschalldurchflussmessgeräts angepasst.

Gemäß einer nächsten vorteilhaften Ausgestaltung sind der erste Ultraschallwandler des ersten Ultraschallwandlerpaares und der dritte Ultraschallwandler des zweiten Ultraschallwandlerpaares auf dem Umfang einer ersten Querschnittsfläche des Messrohrs angeordnet und der zweite Ultraschallwandler des ersten Ultraschallwandlerpaares und der vierte Ultraschallwandler des zweiten Ultraschallwandlerpaares sind auf dem Umfang einer zweiten Querschnittsfläche des Messrohrs angeordnet. Diese Ausgestaltung gewährleistet, dass das strömende Medium innerhalb eines Messrohrabschnittes erfasst wird, was insbesondere bei aufgrund der Variation des Messrohrs sich verändernden Strömungsprofilen vorteilhaft ist.

Eine weitere Ausgestaltung des Durchflussmessgerätes zeichnet sich dadurch aus, dass die Messrohrachse zumindest abschnittsweise gebogen ausgebildet ist. Dementsprechend ist ebenfalls das Messrohr zumindest abschnittsweise gebogen ausgebildet. Damit eignet sich das Durchflussmessgerät insbesondere auch für den Einsatz beispielsweise im Einlaufbereich eines Absperrorgans, in dem typischerweise eine Optimierung des Strömungsverlaufs durch eine entsprechende Formung des Einlaufbereiches stattfindet.

Gemäß einer zweiten Lehre der vorliegenden Erfindung wird die eingangs genannte Aufgabe durch eine eingangs dargelegte Verwendung eines Ultraschalldurchflussmessgeräts in einem Absperrorgan dadurch gelöst, dass das Ultraschalldurchflussmessgerät wenigstens ein Messrohr, wenigstens ein erstes Ultraschallwandlerpaar umfassend einen ersten Ultraschallwandler und einen zweiten Ultraschallwandler und wenigstens ein zweites Ultraschallwandlerpaar umfassend einen dritten Ultraschallwandler und einen vierten Ultraschallwandler aufweist, wobei jeder Ultraschallwandler als Ultraschallsender und/oder als Ultraschallempfänger ausgestaltet ist,
dass das erste Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem ersten Ultraschallwandler und dem zweiten Ultraschallwandler einen ersten Signalpfad definiert, wobei der erste Signalpfad eine erste Messebene definiert,
dass das zweite Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem dritten Ultraschallwandler und dem vierten Ultraschallwandler einen zweiten Signalpfad definiert, wobei der zweite Signalpfad eine zweite Messebene definiert,
dass der erste Signalpfad im Wesentlichen V-förmig ausgebildet ist und dasss der zweite Signalpfad im Wesentlichen V-förmig ausgebildet ist,
dass das Messrohr des Ultraschalldurchflussmessgerätes zumindest als Teil des Strömungskanals ausgebildet ist,
dass das Messrohr wenigstens eine Messrohrquerschnittsfläche und eine Messrohrachse aufweist,
dass das Messrohr eine erste Messrohrhälfte und eine zweite Messrohrhälfte aufweist,
dass das Messrohr im Verlauf des ersten Signalpfades und des zweiten Signalpfades eine Änderung der Form und/oder der Größe der Messrohrquerschnittsfläche aufweist,
dass der erste Ultraschallwandler auf der ersten Messrohrhälfte angeordnet ist und dass der dritte Ultraschallwandler auf der zweiten Messrohrhälfte angeordnet ist,
dass das erste Ultraschallwandlerpaar und das zweite Ultraschallwandlerpaar derart an dem Messrohr angeordnet sind, dass die erste Messebene und die zweite Messebene nicht parallel zueinander ausgerichtet sind und
dass die Ultraschallwandler derart angeordnet sind, dass sich der Abstand zwischen der ersten Messebene und der zweiten Messebene im Verlauf der Messrohrachse zumindest abschnittsweise verringert, wobei sich die erste Messebene und die zweite Messebene im Bereich der Messstrecke zwischen den Ultraschallwandlern nicht schneiden.

Gemäß einer besonders bevorzugten Ausbildung ist das Ultraschalldurchflussmessgerät nach einer der zuvor beschriebenen Ausgestaltungen ausgebildet.

Die erfindungsgemäße Ausgestaltung des Ultraschalldurchflussmessgeräts gewährleistet insbesondere bei verschiedenen Stellungen des beweglichen Sperrkörpers, die ebenfalls eine Auswirkung auf die Form des Strömungsquerschnittes im Strömungskanal haben, eine zuverlässige Bestimmung des Durchflusses eines strömenden Mediums, wodurch ebenfalls die Funktionsweise des Absperrorgans verbessert werden kann.

Gemäß einer dritten Lehre der vorliegenden Erfindung wird die eingangs dargelegte Aufgabe durch ein eingangs beschriebenes Absperrorgan mit einem Ultraschalldurchflussmessgerät, dadurch gelöst, dass das Ultraschalldurchflussmessgerät wenigstens ein Messrohr, wenigstens ein erstes Ultraschallwandlerpaar umfassend einen ersten Ultraschallwandler und einen zweiten Ultraschallwandler und wenigstens ein zweites Ultraschallwandlerpaar umfassend einen dritten Ultraschallwandler und einen vierten Ultraschallwandler aufweist, wobei jeder Ultraschallwandler als Ultraschallsender und/oder als Ultraschallempfänger ausgestaltet ist,
dass das erste Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem ersten Ultraschallwandler und dem zweiten Ultraschallwandler einen ersten Signalpfad definiert, wobei der erste Signalpfad eine erste Messebene definiert,
dass das zweite Ultraschallwandlerpaar in Strömungsrichtung gesehen versetzt derart an dem Messrohr angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem dritten Ultraschallwandler und dem vierten Ultraschallwandler einen zweiten Signalpfad definiert, wobei der zweite Signalpfad eine zweite Messebene definiert,
dass der erste Signalpfad im Wesentlichen V-förmig ausgebildet ist und dasss der zweite Signalpfad im Wesentlichen V-förmig ausgebildet ist,
dass das Messrohr des Ultraschalldurchflussmessgerätes zumindest als Teil des Strömungskanals ausgebildet ist,
dass das Messrohr wenigstens eine Messrohrquerschnittsfläche und eine Messrohrachse aufweist,
dass das Messrohr eine erste Messrohrhälfte und eine zweite Messrohrhälfte aufweist,
dass das Messrohr im Verlauf des ersten Signalpfades und des zweiten Signalpfades eine Änderung der Form und/oder der Größe der Messrohrquerschnittsfläche aufweist,
dass der erste Ultraschallwandler auf der ersten Messrohrhälfte angeordnet ist und dass der dritte Ultraschallwandler auf der zweiten Messrohrhälfte angeordnet ist,
dass das erste Ultraschallwandlerpaar und das zweite Ultraschallwandlerpaar derart an dem Messrohr angeordnet sind, dass die erste Messebene und die zweite Messebene nicht parallel zueinander ausgerichtet sind und
dass die Ultraschallwandler derart angeordnet sind, dass sich der Abstand zwischen der ersten Messebene und der zweiten Messebene im Verlauf der Messrohrachse zumindest abschnittsweise verringert, wobei sich die erste Messebene und die zweite Messebene im Bereich der Messstrecke zwischen den Ultraschallwandlern nicht schneiden.

Besonders bevorzugt ist das Ultraschalldurchflussmessgerät nach einer der oben beschriebenen Ausgestaltungen ausgebildet.

Durch die beschriebene Ausbildung des Messrohrs als Teil des Strömungskanals kann der Einlaufbereich des Absperrrorgans im Hinblick auf die Ablösung von die Durchflussmessung störenden Wirbeln optimiert werden, wobei in Kombination mit der erfindungsgemäßen Anordnung der Ultraschallwandler die Genauigkeit der Durchflussmessung erhöht und damit auch die Funktionsweise des Absperrorgans verbessert werden kann.

Im Einzelnen gibt es nun eine Vielzahl von Möglichkeiten, das erfindungsgemäße Ultraschalldurchflussmessgerät, die erfindungsgemäße Verwendung und das erfindungsgemäße Absperrorgan auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: eine erste erfindungsgemäße Anordnung eines ersten Ultraschallwandlerpaares und eines zweiten Ultraschallwandlerpaares,
- Fig. 2: ein erstes Ausführungsbeispiel eines erfindungsgemäßen Ultraschalldurchflussmessgeräts, einer Verwendung und eines erfindungsgemäßen Absperrorgans,
- Fig. 3: das in Fig. 2 dargestellte Ausführungsbeispiel in Seitenansicht,
- Fig. 4: ein Ausführungsbeispiel des Verlaufs der Signalpfade in vergrößerter Ansicht
- Fig. 5: ein Messrohr bzw. einen Strömungskanal in Seitenansicht und
- Fig. 6: den Verlauf der Messrohrquerschnittsfläche des in Fig. 5 dargestellten Messrohrs bzw. Strömungskanals.

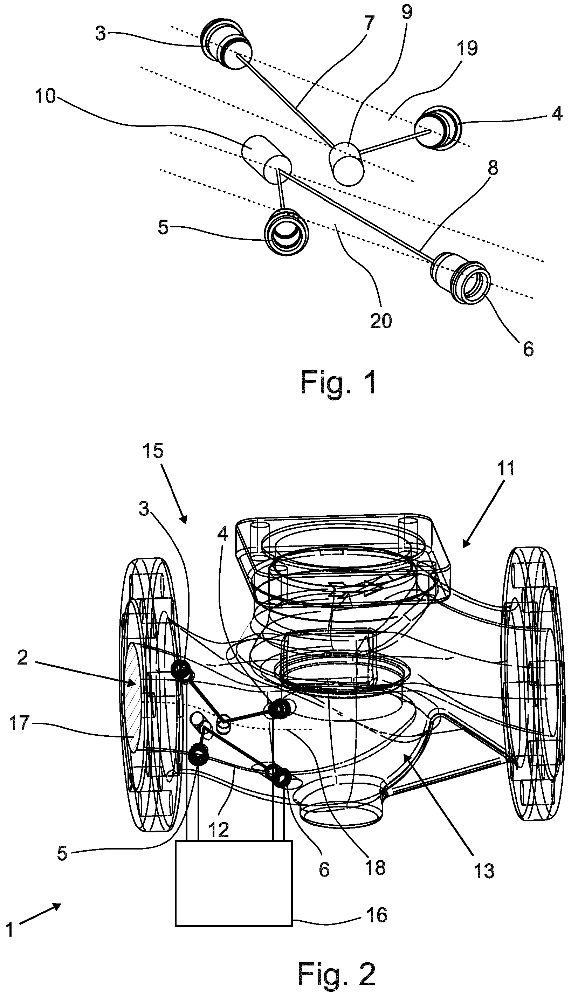

In Fig. 1 ist dargestellt eine erste Anordnung eines ersten Ultraschallwandlerpaares 3, 4 mit einem ersten Ultraschallwandler 3 und einem zweiten Ultraschallwandler 4 und eines zweiten Ultraschallwandlerpaares 5,6 mit einem dritten Ultraschallwandler 5 und einem vierten Ultraschallwandler 6, wobei jeder Ultraschallwandler 3, 4, 5, 6 als Ultraschallsender und als Ultraschallempfänger ausgestaltet ist. Die dargestellte Anordnung eignet sich für den Einsatz in einem erfindungsgemäßen Ultraschalldurchflussmessgerät 1.

Zwischen dem ersten Ultraschallwandler 3 und dem zweiten Ultraschallwandler 4 ist ein V-förmiger erster Signalpfad 7 ausgebildet, wobei der erste Signalpfad 7 eine erste Messebene 19 definiert. Zudem verläuft der erste Signalpfad 7 über ein Reflexionselement mit einer Reflexionsfläche 9.

Zwischen dem dritten Ultraschallwandler 5 und dem vierten Ultraschallwandler 6 ist der zweite V-förmige Signalpfad 8 ausgebildet, der eine zweite Messebene 20 definiert. Der zweite Signalpfad 8 verläuft ebenfalls über ein Reflexionselement mit einer Reflexionsfläche 10.

Die durch die Signalpfade 7 und 8 aufgespannten Messebenen 19, 20 sind derart ausgerichtet, dass sie nicht parallel zueinander verlaufen. Im dargestellten Ausführungsbeispiel verringert sich der Abstand der Messebenen 19, 20 im Verlauf der Messstrecke zwischen den Ultraschallwandlern 3 und 4 bzw. 5 und 6.

Fig. 2 zeigt die Anwendung der in Fig. 1 dargestellten Anordnung des ersten Ultraschallwandlerpaares 3, 4 und des zweiten Ultraschallwandlerpaares 5, 6 in einem Ultraschalldurchflussmessgerät 1 sowie die Verwendung des Ultraschalldurchflussmessgeräts 1 in einem Absperrorgan 11.

Das Absperrorgan 11 weist einen Strömungskanal 12 und eine in dem Strömungskanal 12 angeordnete Sperrvorrichtung 13 auf, wobei die Sperrvorrichtung 13 eine Sperrkörperaufnahme und einen in der Sperrkörperaufnahme beweglichen Sperrkörper, der hier nicht dargestellt ist, aufweist, wobei durch Bewegen des Sperrkörpers in der Sperrkörperaufnahme der Strömungsquerschnitt für das Medium in der Sperrvorrichtung 13 und damit im Strömungskanal 12 veränderbar ist, wobei der Strömungskanal 12 in Strömungsrichtung gesehen vor der Sperrvorrichtung 13 einen Einlaufbereich 15 aufweist.

Im dargestellten Absperrorgan 11 ist der Strömungskanal 12, im Detail der Einlaufbereich 15 als Messrohr 2 des Ultraschalldurchflussmessgerätes 1 ausgebildet. Das erste Ultraschallwandlerpaar 3, 4 und das zweite Ultraschallwandlerpaar 5, 6 sind im Einlaufbereich 15 an dem Strömungskanal 12 entsprechend der zu Fig. 1 beschriebenen Anordnung angebracht.

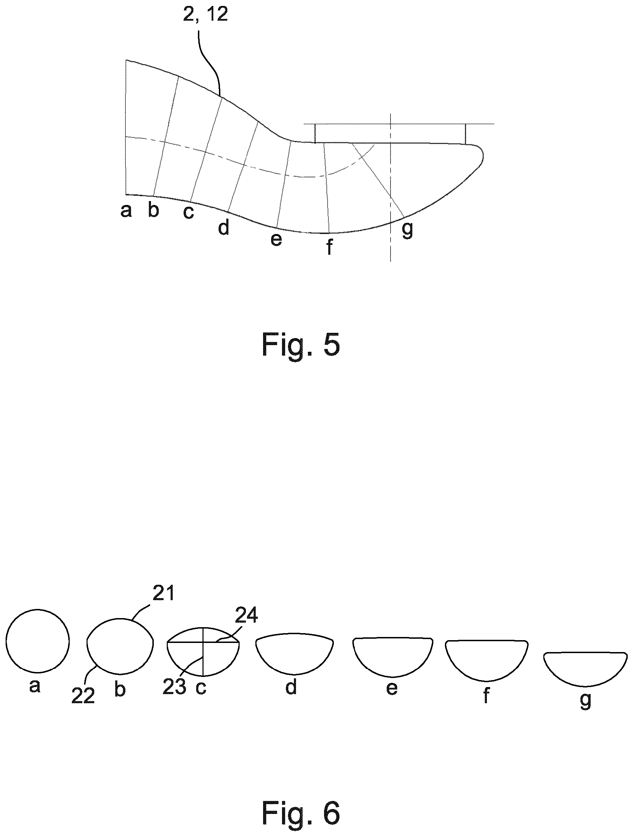

Zudem weist das Messrohr 2 einen Messrohrquerschnitt 17 auf, der sich im Verlauf der Messstrecke zwischen den Ultraschallwandlerpaaren 3, 4, 5, 6 sowohl in der Form als auch in der Größe ändert. Im Detail ist der Messrohrquerschnitt 17 im Bereich vor dem ersten Ultraschallwandler 3 und dem dritten Ultraschallwandler 5 im Wesentlichen rund, also kreisförmig, ausgebildet. Im Verlauf der Messstrecke verändert sich der Messrohrquerschnitt 17 kontinuierlich. Im Bereich des zweiten Ultraschallwandlers 4 und des vierten Ultraschallwandlers 6 ist der Messrohrquerschnitt 17 im Wesentlichen oval ausgebildet, wobei die Größe der Messrohrquerschnittsfläche 17 sich im Verlauf der Messstrecke verringert. Im Detail weist der Messrohrquerschnitt 17 zwei Kreisbögen auf, deren Radien sich im Verlauf der Messstrecke unterschiedlich schnell vergrößern (vgl. Fig. 6), sodass insgesamt eine Abflachung des Messrohrquerschnitts sowie eine Verbreiterung der Messrohrquerschnittsfläche 17 vorliegt.

Die Messrohrachse 18 und das Messrohr 2 sind im dargestellten Ausführungsbeispiel im Bereich der Messstrecke gebogen ausgebildet.

Der Strömungskanal 12 bzw. das Messrohr 2 ist insgesamt derart ausgebildet, dass im Betrieb die Ablösung von Wirbeln des Mediums minimiert ist.

Zudem weist das dargestellte Ultraschalldurchflussmessgerät 1 eine Steuer- und Auswerteeinheit 16 auf, die den Durchfluss eines strömenden Mediums basierend auf wenigstens den zwei Ultraschallsignalen bestimmt.

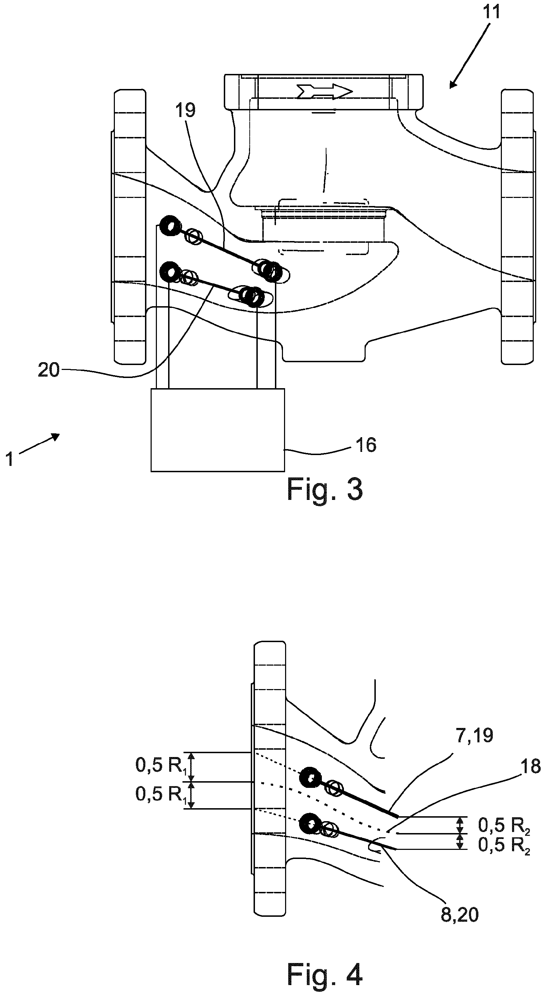

Die Fig. 3 zeigt die in Fig. 2 dargestellte Anordnung in Seitenansicht. Diese Darstellung zeigt anschaulich, dass sich der Abstand der durch die Signalpfade 7 und 8 aufgespannten Messebenen 19 und 20 im Verlauf der Messstrecke verringert.

Fig. 4 zeigt einen weiteren Verlauf des ersten Signalpfades 7 und des zweiten Signalpfades 8 bzw. der ersten Messebene 19 und der zweiten Messebene 20. Die Darstellung zeigt, dass die durch beiden Ultraschallwandlerpaare aufgespannten Messebenen 19, 20 im Verlauf der Messstrecke einerseits aufeinander zuverlaufen und andererseits im jeweils gleichen Abstand zur Messrohrachse 18 angeordnet sind. R₁ bezeichnet in der Darstellung den Radius des Messrohrquerschnitts 17 im Bereich vor dem ersten Ultraschallwandler 3 und dem dritten Ultraschallwandler 5 und R₂ bezeichnet den Radius des Messrohrquerschnitts 17, bzw. die halbe Höhe des Messrohrquerschnittes 17 im Falle einer ovalen Form, im Bereich kurz vor dem zweiten Ultraschallwandler 4 und dem vierten Ultraschallwandler 6.

Fig. 5 zeigt ein Ausführungsbeispiel eines Messrohrs 2 bzw. eines Strömungskanals 12 vor der Sperrvorrichtung 13, wobei unterschiedliche Abschnitte a bis g zum Vergleich mit Fig. 6 kenntlich gemacht sind. Die Ultraschallwandler 3 und 5 sind im Betrieb ungefähr im Abschnitt zwischen b und c angeordnet, die Ultraschallwandler 4 und 6 sind im Betrieb ungefähr im Abschnitt zwischen e und f angeordnet,

Fig. 6 zeigt nun den Verlauf des Messrohrquerschnittes bzw. des Querschnittes des Strömungskanals zwischen den Bereichen a bis f. Die Darstellung zeigt, dass der Messrohrquerschnitt 17 zunächst kreisförmig ausgestaltet ist und im Verlauf der Messstrecke bzw. des Strömungskanals kontinuierlich oval ausgebildet ist. Dazu weist der Messrohrquerschnitt einen ersten oberen Kreisbogen 21 und einen zweiten unteren Kreisbogen 22 auf, deren Radien im Verlauf der Messstrecke kontinuierlich größer werden, wobei der Radius des ersten Kreisbogens 21 schneller größer wird als der Radius des zweiten Kreisbogens 22. Die beiden Kreisbögen 21 und 22 sind mittels Übergangsabschnitten kontinuierlich miteinander verbunden. Durch die Abflachung des Messrohrquerschnittes weist dieser im Verlauf der Messtrecke eine Höhe 23 und eine Breite 24 auf, wobei die Höhe 23 im dargestellten Ausführungsbeispiels durch den Abstand der Scheitelpunkte des ersten Kreisbogens 21 und des zweiten Kreisbogens definiert ist und wobei die Breite 24 des Messrohrquerschnitts 17 durch den größten Abstand der Übergangsabschnitte zwischen dem ersten Kreisbogen 21 und dem zweiten Kreisbogen 22 definiert ist. Diese Ausgestaltung weist den Vorteil auf, dass eine Ablösung von Wirbeln im Bereich der Messstrecke reduziert werden kann, wodurch in Kombination mit der erfindungsgemäße Anordnung der Ultraschallwandler 3, 4, 5, 6 die Bestimmung der Geschwindigkeit des Mediums verbessert werden kann.

Im Ergebnis zeigen sämtliche Figuren Ausführungsbeispiele der Erfindung, wobei insbesondere durch die erfindungsgemäße Anordnung der Ultraschallwandlerpaare der Durchfluss auch in anspruchsvollen Situationen, in denen das Strömungsprofil aufgrund einer Variation des Messrohrs im Bereich der Messstrecke stark gestört ist, besonders zuverlässig bestimmt werden kann.

### Bezugszeichen

- 1: Ultraschalldurchflussmessgerät
- 2: Messrohr
- 3: Ultraschallwandler
- 4: Ultraschallwandler
- 5: Ultraschallwandler
- 6: Ultraschallwandler
- 7: erster Signalpfad
- 8: zweiter Signalpfad
- 9: Reflexionsfläche
- 10: Reflexionsfläche
- 11: Absperrorgan
- 12: Strömungskanal
- 13: Sperrvorrichtung
- 15: Einlaufbereich
- 16: Steuer- und Auswerteeinheit
- 17: Messrohrquerschnitt
- 18: Messrohrachse
- 19: erste Messebene
- 20: zweite Messebene
- 21: erster Kreisbogen
- 22: zweiter Kreisbogen
- 23: Höhe des Messrohrquerschnittes
- 24: Breite des Messrohrquerschnittes

## Patentansprüche

1. Ultraschalldurchflussmessgerät (1) mit wenigstens einem Messrohr (2), mit wenigstens einem ersten Ultraschallwandlerpaar (3, 4) umfassend einen ersten Ultraschallwandler (3) und einen zweiten Ultraschallwandler (4) und mit wenigstens einem zweiten Ultraschallwandlerpaar (5, 6) umfassend einen dritten Ultraschallwandler (5) und einen vierten Ultraschallwandler (6), wobei jeder Ultraschallwandler (3, 4, 5, 6) als Ultraschallsender und/oder als Ultraschallempfänger ausgestaltet ist,
wobei das erste Ultraschallwandlerpaar (3, 4) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem ersten Ultraschallwandler (3) und dem zweiten Ultraschallwandler (4) einen ersten Signalpfad (7) definiert, wobei der erste Signalpfad (7) eine erste Messebene (19) definiert,
wobei das zweite Ultraschallwandlerpaar (5,6) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem dritten Ultraschallwandler (5) und dem vierten Ultraschallwandler (6) einen zweiten Signalpfad (8) definiert, wobei der zweite Signalpfad (8) eine zweite Messebene (20) definiert,
wobei das Messrohr (2) wenigstens eine Messrohrquerschnittsfläche (17) und eine Messrohrachse (18) aufweist und
wobei das Messrohr (2) eine erste Messrohrhälfte und eine zweite Messrohrhälfte aufweist,
wobei das Messrohr (2) im Verlauf des ersten Signalpfades (7) und des zweiten Signalpfades (8) eine Änderung der Form und/oder der Größe der Messrohrquerschnittsfläche (17) aufweist,
wobei der erste Ultraschallwandler (3) auf der ersten Messrohrhälfte angeordnet ist und wobei der dritte Ultraschallwandler (5) auf der zweiten Messrohrhälfte angeordnet ist,
wobei das erste Ultraschallwandlerpaar (3, 4) und das zweite Ultraschallwandlerpaar (5, 6) derart an dem Messrohr (2) angeordnet sind, dass die erste Messebene und die zweite Messebene nicht parallel zueinander ausgerichtet sind,
**dadurch gekennzeichnet,**
**dass** der erste Signalpfad (7) im Wesentlichen V-förmig ausgebildet ist und dass der zweite Signalpfad (8) im Wesentlichen V-förmig ausgebildet ist,
**dass** die Ultraschallwandler derart angeordnet sind, dass sich der Abstand zwischen der ersten Messebene und der zweiten Messebene im Verlauf der Messrohrachse zumindest abschnittsweise verringert, wobei sich die erste Messebene und die zweite Messebene im Bereich der Messstrecke zwischen den Ultraschallwandlern nicht schneiden.

2. Ultraschalldurchflussmessgerät (1) nach Anspruch 1, **dadurch gekennzeichnet, dass** das erste Ultraschallwandlerpaar (3, 4) und das zweite Ultraschallwandlerpaar (5, 6) derart an dem Messrohr (2) angeordnet sind, dass im Verlauf der Messstrecke zwischen den Ultraschallwandlern der Abstand der ersten Messebene (19) zur Messrohrachse (18) dem Abstand der zweiten Messebene (20) zur Messrohrachse (18) im Wesentlichen entspricht.

3. Ultraschalldurchflussmessgerät (1) nach einem der Ansprüche 1 oder 2, **dadurch gekennzeichnet, dass** der erste Signalpfad (7) wenigstens eine Reflexionsfläche (9, 10) aufweist und dass der zweite Signalpfad (8) wenigstens eine Reflexionsfläche (9, 10) aufweist.

4. Ultraschalldurchflussmessgerät (1) nach einem der Ansprüche 1 bis 3, **dadurch gekennzeichnet, dass** das erste Ultraschallwandlerpaar (3, 4) auf der ersten Messrohrhälfte angeordnet ist und dass das zweite Ultraschallwandlerpaar (5, 6) auf der zweiten Messrohrhälfte angeordnet ist.

5. Ultraschalldurchflussmessgerät (1) nach einem der Ansprüche 1 bis 4, **dadurch gekennzeichnet, dass** das Messrohr (2) im Verlauf des ersten Signalpfades (7) und des zweiten Signalpfades (8) eine Querschnittsreduzierung aufweist.

6. Ultraschalldurchflussmessgerät (1) nach einem der Ansprüche 1 bis 4, **dadurch gekennzeichnet, dass** das Messrohr (2) im Verlauf des ersten Signalpfades (7) und des zweiten Signalpfades (8) eine Querschnittserweiterung aufweist.

7. Ultraschalldurchflussmessgerät (1) nach einem der Ansprüche 1 bis 6, **dadurch gekennzeichnet, dass** die Messrohrquerschnittsfläche (17) im Bereich oder vor dem Bereich des ersten Ultraschallwandlers (3) und des dritten Ultraschallwandlers (5) im Wesentlichen rund ausgebildet ist und dass die Messrohrquerschnittsfläche (17) im Bereich des zweiten Ultraschallwandlers (4) und des vierten Ultraschallwandlers (6) im Wesentlichen oval ausgebildet ist.

8. Ultraschalldurchflussmessgerät (1) nach einem der Ansprüche 1 bis 7, **dadurch gekennzeichnet, dass** der erste Ultraschallwandler (3) des ersten Ultraschallwandlerpaares und der dritte Ultraschallwandler (5) des zweiten Ultraschallwandlerpaares auf dem Umfang einer ersten Messrohrquerschnittsfläche (17) angeordnet sind und dass der zweite Ultraschallwandler (4) des ersten Ultraschallwandlerpaares und der vierte Ultraschallwandler (6) des zweiten Ultraschallwandlerpaares auf dem Umfang einer zweiten Messrohrquerschnittsfläche (17) angeordnet sind.

9. Ultraschalldurchflussmessgerät (1) nach einem der Ansprüche 1 bis 8, **dadurch gekennzeichnet, dass** die Messrohrachse (18) zumindest abschnittsweise gebogen ausgebildet ist.

10. Verwendung eines Ultraschalldurchflussmessgerätes (1) in einem Absperrorgan (11), wobei das Absperrorgan (11) einen Strömungskanal (12) und eine in dem Strömungskanal (12) angeordnete Sperrvorrichtung (13) aufweist, wobei die Sperrvorrichtung (13) eine Sperrkörperaufnahme und einen in der Sperrkörperaufnahme beweglichen Sperrkörper aufweist, wobei durch Bewegen des Sperrkörpers in der Sperrkörperaufnahme der Strömungsquerschnitt für das Medium in der Sperrvorrichtung (13) und damit im Strömungskanal (12) veränderbar ist, wobei der Strömungskanal (12) in Strömungsrichtung gesehen vor der Sperrvorrichtung (13) einen Einlaufbereich (15) aufweist,
wobei das Ultraschalldurchflussmessgerät (1) wenigstens ein Messrohr (2), wenigstens ein erstes Ultraschallwandlerpaar (3, 4) umfassend einen ersten Ultraschallwandler (3) und einen zweiten Ultraschallwandler (4) und wenigstens ein zweites Ultraschallwandlerpaar (5, 6) umfassend einen dritten Ultraschallwandler (5) und einen vierten Ultraschallwandler (6) aufweist, wobei jeder Ultraschallwandler (3, 4, 5, 6) als Ultraschallsender und/oder als Ultraschallempfänger ausgestaltet ist,
wobei das erste Ultraschallwandlerpaar (3, 4) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem ersten Ultraschallwandler (3) und dem zweiten Ultraschallwandler (4) einen ersten Signalpfad (7) definiert, wobei der erste Signalpfad (7) eine erste Messebene (19) definiert,
wobei das zweite Ultraschallwandlerpaar (5,6) in Strömungsrichtung gesehen versetzt derart an dem Messrohr (2) angeordnet ist, dass der jeweilige Sender im Betrieb ein Ultraschallsignal in Strömungsrichtung oder entgegen der Strömungsrichtung aussendet und dass der Empfänger das von dem Sender ausgesendete Ultraschallsignal empfängt, wobei der Verlauf des Ultraschallsignals zwischen dem dritten Ultraschallwandler (5) und dem vierten Ultraschallwandler (6) einen zweiten Signalpfad (8) definiert, wobei der zweite Signalpfad (8) eine zweite Messebene (20) definiert,
wobei das Messrohr (2) des Ultraschalldurchflussmessgerätes (1) zumindest als Teil des Strömungskanals (12) ausgebildet ist,
wobei das Messrohr (2) wenigstens eine Messrohrquerschnittsfläche (17) und eine Messrohrachse (18) aufweist,
wobei das Messrohr (2) eine erste Messrohrhälfte und eine zweite Messrohrhälfte aufweist,
wobei das Messrohr (2) im Verlauf des ersten Signalpfades (7) und des zweiten Signalpfades (8) eine Änderung der Form und/oder der Größe der Messrohrquerschnittsfläche (17) aufweist,
wobei der erste Ultraschallwandler (3) auf der ersten Messrohrhälfte angeordnet ist und wobei der dritte Ultraschallwandler (5) auf der zweiten Messrohrhälfte angeordnet ist,
wobei das erste Ultraschallwandlerpaar (3, 4) und das zweite Ultraschallwandlerpaar (5, 6) derart an dem Messrohr (2) angeordnet sind, dass die erste Messebene und die zweite Messebene nicht parallel zueinander ausgerichtet sind,
**dadurch gekennzeichnet,**
**dass** der erste Signalpfad (7) im Wesentlichen V-förmig ausgebildet ist und dass der zweite Signalpfad (8) im Wesentlichen V-förmig ausgebildet ist,
**dass** die Ultraschallwandler derart angeordnet sind, dass sich der Abstand zwischen der ersten Messebene und der zweiten Messebene im Verlauf der Messrohrachse zumindest abschnittsweise verringert, wobei sich die erste Messebene und die zweite Messebene im Bereich der Messstrecke zwischen den Ultraschallwandlern nicht schneiden.

11. Verwendung nach Anspruch 10, **dadurch gekennzeichnet, dass** das Ultraschalldurchflussmessgerät (1) nach einem der Ansprüche 1 bis 9 ausgebildet ist.

12. Absperrorgan (11) mit einem Ultraschalldurchflussmessgerät (1), wobei das Absperrorgan (11) einen Strömungskanal (12) und eine in dem Strömungskanal (12) angeordnete Sperrvorrichtung (13) aufweist, wobei die Sperrvorrichtung (13) eine Sperrkörperaufnahme und einen in der Sperrkörperaufnahme beweglichen Sperrkörper aufweist, wobei durch Bewegen des Sperrkörpers in der Sperrkörperaufnahme der Strömungsquerschnitt für das Medium in der Sperrvorrichtung (13) und damit im Strömungskanal (12) veränderbar ist, wobei der Strömungskanal (12) in Strömungsrichtung gesehen vor der Sperrvorrichtung (13) einen Einlaufbereich (15) aufweist,
**dadurch gekennzeichnet,**
**dass** das Ultraschalldurchflussmessgerät (1) nach einem der Ansprüche 1 bis 9 ausgebildet ist, wobei das Messrohr (2) des Ultraschalldurchflussmessgerätes (1) zumindest als Teil des Strömungskanals (12) ausgebildet ist.

## Claims

1. Ultrasonic flowmeter (1) with at least one measuring tube (2), with at least one first ultrasonic transducer pair (3, 4) comprising a first ultrasonic transducer (3) and a second ultrasonic transducer (4) and with at least one second ultrasonic transducer pair (5, 6) comprising a third ultrasonic transducer (5) and a fourth ultrasonic transducer (6), wherein each ultrasonic transducer (3, 4, 5, 6) is designed as an ultrasonic transmitter and/or as an ultrasonic receiver,
wherein the first ultrasonic transducer pair (3, 4) is arranged on the measuring tube (2) offset as viewed in the direction of flow such that the respective transmitter transmits an ultrasonic signal in the direction of flow or against the direction of flow during operation, and that the receiver receives the ultrasonic signal transmitted by the transmitter, wherein the course of the ultrasonic signal between the first ultrasonic transducer (3) and the second ultrasonic transducer (4) defines a first signal path (7), wherein the first signal path (7) define a first measuring plane (19),
wherein the second ultrasonic transducer pair (5, 6) is arranged on the measuring tube (2) offset as viewed in the direction of flow such that the respective transmitter transmits an ultrasonic signal in the direction of flow or against the direction of flow during operation, and that the receiver receives the ultrasonic signal transmitted by the transmitter, wherein the course of the ultrasonic signal between the third ultrasonic transducer (5) and the fourth ultrasonic transducer (6) defines a second signal path (8), wherein the second signal path (8) defines a second measuring plane (20),
wherein the measuring tube (2) has at least one measuring tube cross-sectional area (17) and a measuring tube axis (18), and
wherein the measuring tube (2) comprises a first half of the measuring tube and a second half of the measuring tube,
wherein the measuring tube (2) exhibits a change in the shape and/or size of the measuring tube cross-sectional area (17) in the course of the first signal path (7) and the second signal path (8),
wherein the first ultrasonic transducer (3) is arranged on the first half of the measuring tube and wherein the third ultrasonic transducer (5) is arranged on the second half of the measuring tube,
wherein the first ultrasonic transducer pair (3, 4) and the second ultrasonic transducer pair (5, 6) are arranged on the measuring tube (2) such that the first measuring plane and the second measuring plane are not aligned parallel to one another,
**characterized in**
**that** the first signal path (7) is essentially V-shaped and that the second signal path (8) is essentially V-shaped,
**that** the ultrasonic transducers (3, 4, 5, 6) are arranged such that the distance between the first measuring plane (19) and the second measuring plane (20) decreases at least in sections in the course of the measuring tube axis (18), wherein the first measurement plane and the second measurement plane do not intersect in the measurement section between the ultrasonic transducers.

2. Ultrasonic flowmeter (1) according to claim 1, **characterized in that** the first ultrasonic transducer pair (3, 4) and the second ultrasonic transducer pair (5, 6) are arranged on the measuring tube (2) such that, in the course of the measuring section between the ultrasonic transducers, the distance of the first measuring plane (19) from the measuring tube axis (18) essentially corresponds to the distance of the second measuring plane (20) from the measuring tube axis (18).

3. Ultrasonic flowmeter (1) according to claim 1 or 2, **characterized in that** the first signal path (7) has at least one reflecting surface (9, 10) and that the second signal path (8) has at least one reflecting surface (9, 10).

4. Ultrasonic flowmeter (1) according to any one of claims 1 to 3, **characterized in that** the first ultrasonic transducer pair (3, 4) is arranged on the first half of the measuring tube and that the second ultrasonic transducer pair (5, 6) is arranged on the second half of the measuring tube.

5. Ultrasonic flowmeter (1) according to any one of claims 1 to 4, **characterized in that** the measuring tube (2) has a cross-sectional reduction in the course of the first signal path (7) and the second signal path (8).

6. Ultrasonic flowmeter (1) according to any one of claims 1 to 4, **characterized in that** the measuring tube (2) has a cross-sectional expansion in the course of the first signal path (7) and the second signal path (8).

7. Ultrasonic flowmeter (1) according to any one of claims 1 to 6, **characterized in that** the measuring tube cross-sectional area (17) is essentially round in the region or upstream of the region of the first ultrasonic transducer (3) and the third ultrasonic transducer (5), and that the measuring tube cross-sectional area (17) is essentially oval in the region of the second ultrasonic transducer (4) and the fourth ultrasonic transducer (6).

8. Ultrasonic flowmeter (1) according to any one of claims 1 to 7, **characterized in that** the first ultrasonic transducer (3) of the first ultrasonic transducer pair and the third ultrasonic transducer (5) of the second ultrasonic transducer pair are arranged on the circumference of a first measuring tube cross-sectional area (17) and that the second ultrasonic transducer (4) of the first ultrasonic transducer pair and the fourth ultrasonic transducer (6) of the second ultrasonic transducer pair are arranged on the circumference of a second measuring tube cross-sectional area (17).

9. Ultrasonic flowmeter (1) according to any one of claims 1 to 8, **characterized in that** the measuring tube axis (18) is formed curved at least in sections.

10. Use of an ultrasonic flowmeter (1) in a shut-off device (11), wherein the shut-off device (11) has a flow channel (12) and a blocking device (13) arranged in the flow channel (12), wherein the blocking device (13) has a blocking body receptacle and a blocking body movable in the blocking body receptacle, wherein the flow cross-section for the medium in the blocking device (13) and thus in the flow channel (12) can be changed by moving the blocking body in the blocking body receptacle, wherein the flow channel (12) has an inlet region (15) upstream of the blocking device (13) as viewed in the direction of flow,
wherein the ultrasonic flowmeter (1) has at least one measuring tube (2), at least one first ultrasonic transducer pair (3, 4) comprising a first ultrasonic transducer (3) and a second ultrasonic transducer (4) and at least one second ultrasonic transducer pair (5, 6) comprising a third ultrasonic transducer (5) and a fourth ultrasonic transducer (6), wherein each ultrasonic transducer (3, 4, 5, 6) is designed as an ultrasonic transmitter and/or as an ultrasonic receiver,
that the first ultrasonic transducer pair (3, 4) is arranged on the measuring tube (2) offset as viewed in the direction of flow such that, during operation, the respective transmitter transmits an ultrasonic signal in the direction of flow or against the direction of flow, and that the receiver receives the ultrasonic signal transmitted by the transmitter, wherein the course of the ultrasonic signal between the first ultrasonic transducer (3) and the second ultrasonic transducer (4) defines a first signal path (7), wherein the first signal path (7) defines a first measuring plane (19),
wherein the second ultrasonic transducer pair (5, 6) is arranged on the measuring tube (2) offset as viewed in the direction of flow such that, during operation, the respective transmitter transmits an ultrasonic signal in the direction of flow or against the direction of flow, and that the receiver receives the ultrasonic signal transmitted by the transmitter, wherein the course of the ultrasonic signal defines a second signal path (8) between the third ultrasonic transducer (5) and the fourth ultrasonic transducer (6), wherein the second signal path (8) defines a second measuring plane (20),
wherein the measuring tube (2) of the ultrasonic flowmeter (1) is formed at least as part of the flow channel (12),
wherein the measuring tube (2) has at least one measuring tube cross-sectional area (17) and a measuring tube axis (18),
wherein the measuring tube (2) comprises a first half of the measuring tube and a second half of the measuring tube,
wherein the measuring tube (2) exhibits a change in the shape and/or size of the measuring tube cross-sectional area (17) in the course of the first signal path (7) and the second signal path (8),
wherein the first ultrasonic transducer (3) is arranged on the first half of the measuring tube and wherein the third ultrasonic transducer (5) is arranged on the second half of the measuring tube,
wherein the first ultrasonic transducer pair (3, 4) and the second ultrasonic transducer pair (5, 6) are arranged on the measuring tube (2) such that the first measuring plane and the second measuring plane are not aligned parallel to one another,
**characterized in**
**that** the first signal path (7) is essentially V-shaped and that the second signal path (8) is essentially V-shaped,
**that** the ultrasonic transducers are arranged such that the distance between the first measuring plane and the second measuring plane decreases at least in sections in the course of the measuring tube axis, wherein the first measurement plane and the second measurement plane do not intersect in the measurement section between the ultrasonic transducers.

11. Use according to claim 10, **characterized in that** the ultrasonic flowmeter (1) is designed according to any one of claims 1 to 9.

12. Shut-off device (11) with an ultrasonic flowmeter (1), wherein the shut-off device (11) has a flow channel (12) and a blocking device (13) arranged in the flow channel (12), wherein the blocking device (13) has a blocking body receptacle and a blocking body movable in the blocking body receptacle, wherein the flow cross-section for the medium in the blocking device (13) and thus in the flow channel (12) can be changed by moving the blocking body in the blocking body receptacle, wherein the flow channel (12) has an inlet region (15) upstream of the blocking device (13) as viewed in the direction of flow, **characterized in**
**that** the ultrasonic flowmeter (1) is designed according to any one of claims 1 to 9, wherein the measuring tube (2) of the ultrasonic flowmeter (1) is designed at least as part of the flow channel (12).

## Revendications

1. Débitmètre à ultrasons (1) comportant au moins un tube de mesure (2), au moins une première paire de transducteurs à ultrasons (3, 4) comprenant un premier transducteur à ultrasons (3) et un deuxième transducteur à ultrasons (4), et comportant au moins une deuxième paire de transducteurs à ultrasons (5, 6) comprenant un troisième transducteur à ultrasons (5) et un quatrième transducteur à ultrasons (6), chaque transducteur à ultrasons (3, 4, 5, 6) étant réalisé sous forme d'émetteur à ultrasons et/ou sous forme de récepteur à ultrasons,
la première paire de transducteurs à ultrasons (3, 4), vue dans le sens de l'écoulement, étant agencée de manière décalée sur le tube de mesure (2) de telle sorte que l'émetteur respectif émet en fonctionnement un signal ultrasonore dans le sens de l'écoulement ou à contresens de l'écoulement, et que le récepteur reçoit le signal ultrasonore émis par l'émetteur, le parcours du signal ultrasonore entre le premier transducteur à ultrasons (3) et le deuxième transducteur à ultrasons (4) définissant un premier trajet de signal (7), le premier trajet de signal (7) définissant un premier plan de mesure (19),
la deuxième paire de transducteurs à ultrasons (5, 6), vue dans le sens de l'écoulement, étant agencée de manière décalée sur le tube de mesure (2) de telle sorte que l'émetteur respectif émet en fonctionnement un signal ultrasonore dans le sens de l'écoulement ou à contresens de l'écoulement, et que le récepteur reçoit le signal ultrasonore émis par l'émetteur, le parcours du signal ultrasonique entre le troisième transducteur à ultrasons (5) et le quatrième transducteur à ultrasons (6) définissant un deuxième trajet de signal (8), le deuxième trajet de signal (8) définissant un deuxième plan de mesure (20),
le tube de mesure (2) présentant au moins une surface de section transversale de tube de mesure (17) et un axe de tube de mesure (18), et
le tube de mesure (2) présentant une première moitié de tube de mesure et une deuxième moitié de tube de mesure, le tube de mesure (2) présentant une modification de la forme et/ou de la taille de la surface de section transversale de tube de mesure (17) sur le parcours du premier trajet de signal (7) et du deuxième trajet de signal (8),
le premier transducteur à ultrasons (3) étant agencé sur la première moitié de tube de mesure, et
le troisième transducteur à ultrasons (5) étant agencé sur la deuxième moitié de tube de mesure,
la première paire de transducteurs à ultrasons (3, 4) et la deuxième paire de transducteurs à ultrasons (5, 6) étant agencées sur le tube de mesure (2) de telle sorte que le premier plan de mesure et le deuxième plan de mesure ne sont pas alignés parallèlement l'un à l'autre, **caractérisé**
**en ce que** le premier trajet de signal (7) est réalisé sensiblement en forme de V et le deuxième trajet de signal (8) est réalisé sensiblement en forme de V,
**en ce que** les transducteurs à ultrasons sont agencés de telle sorte que la distance entre le premier plan de mesure et le deuxième plan de mesure se réduit au moins par sections sur le parcours de l'axe du tube de mesure, le premier plan de mesure et le deuxième plan de mesure ne se coupant pas dans la zone de l'étendue de mesure entre les transducteurs à ultrasons.

2. Débitmètre à ultrasons (1) selon la revendication 1, **caractérisé en ce que** la première paire de transducteurs à ultrasons (3, 4) et la deuxième paire de transducteurs à ultrasons (5, 6) sont agencées sur le tube de mesure (2) de telle sorte que, sur le parcours de l'étendue de mesure entre les transducteurs à ultrasons, la distance du premier plan de mesure (19) par rapport à l'axe du tube de mesure (18) correspond sensiblement à la distance du deuxième plan de mesure (20) par rapport à l'axe du tube de mesure (18).

3. Débitmètre à ultrasons (1) selon l'une des revendications 1 ou 2, **caractérisé en ce que** le premier trajet de signal (7) présente au moins une surface de réflexion (9, 10) et que le deuxième trajet de signal (8) présente au moins une surface de réflexion (9, 10).

4. Débitmètre à ultrasons (1) selon l'une des revendications 1 à 3, **caractérisé en ce que** la première paire de transducteurs à ultrasons (3, 4) est agencée sur la première moitié de tube de mesure et que la deuxième paire de transducteurs à ultrasons (5, 6) est agencée sur la deuxième moitié de tube de mesure.

5. Débitmètre à ultrasons (1) selon l'une des revendications 1 à 4, **caractérisé en ce que** le tube de mesure (2) présente une réduction de section transversale sur le parcours du premier trajet de signal (7) et du deuxième trajet de signal (8).

6. Débitmètre à ultrasons (1) selon l'une des revendications 1 à 4, **caractérisé en ce que** le tube de mesure (2) présente une extension de section transversale sur le parcours du premier trajet de signal (7) et du deuxième trajet de signal (8).

7. Débitmètre à ultrasons (1) selon l'une des revendications 1 à 6, **caractérisé en ce que** la surface de section transversale du tube de mesure (17) est réalisée sous une forme sensiblement ronde dans la zone ou en amont de la zone du premier transducteur à ultrasons (3) et du troisième transducteur à ultrasons (5), et **en ce que** la surface de section transversale de tube de mesure (17) est réalisée sous une forme sensiblement ovale dans la zone du deuxième transducteur à ultrasons (4) et du quatrième transducteur à ultrasons (6).

8. Débitmètre à ultrasons (1) selon l'une des revendications 1 à 7, **caractérisé en ce que** le premier transducteur à ultrasons (3) de la première paire de transducteurs à ultrasons et le troisième transducteur à ultrasons (5) de la deuxième paire de transducteurs à ultrasons sont agencés sur la périphérie d'une première surface de section transversale de tube de mesure (17), et **en ce que** le deuxième transducteur à ultrasons (4) de la première paire de transducteurs à ultrasons et le quatrième transducteur à ultrasons (6) de la deuxième paire de transducteurs à ultrasons sont agencés sur la périphérie d'une deuxième surface de section transversale de tube de mesure (17).

9. Débitmètre à ultrasons (1) selon l'une des revendications 1 à 8, **caractérisé en ce que** l'axe de tube de mesure (18) est réalisé sous une forme courbe au moins par sections.

10. Utilisation d'un débitmètre à ultrasons (1) dans un organe d'arrêt (11), l'organe d'arrêt (11) présentant un canal d'écoulement (12) et un dispositif de blocage (13) agencé dans le canal d'écoulement (12), le dispositif de blocage (13) présentant un logement de corps de blocage et un corps de blocage mobile dans le logement de corps de blocage, dans lequel, par le déplacement du corps de blocage dans le logement de corps de blocage, la section transversale d'écoulement pour le milieu est modifiable dans le dispositif de blocage (13) et ainsi dans le canal d'écoulement (12), le canal d'écoulement (12), vu dans le sens de l'écoulement, présentant une zone d'entrée (15) en amont du dispositif de blocage (13),
le débitmètre à ultrasons (1) comportant au moins un tube de mesure (2), au moins une première paire de transducteurs à ultrasons (3, 4) comprenant un premier transducteur à ultrasons (3) et un deuxième transducteur à ultrasons (4), et au moins une deuxième paire de transducteurs à ultrasons (5, 6) comprenant un troisième transducteur à ultrasons (5) et un quatrième transducteur à ultrasons (6), chaque transducteur à ultrasons (3, 4, 5, 6) étant réalisé sous forme d'émetteur à ultrasons et/ou sous forme de récepteur à ultrasons,
la première paire de transducteurs à ultrasons (3, 4), vue dans le sens de l'écoulement, étant agencée de manière décalée sur le tube de mesure (2) de telle sorte que l'émetteur respectif émet en fonctionnement un signal ultrasonore dans le sens de l'écoulement ou à contresens de l'écoulement, et que le récepteur reçoit le signal ultrasonore émis par l'émetteur, le parcours du signal ultrasonore entre le premier transducteur à ultrasons (3) et le deuxième transducteur à ultrasons (4) définissant un premier trajet de signal (7), le premier trajet de signal (7) définissant un premier plan de mesure (19),
la deuxième paire de transducteurs à ultrasons (5, 6), vue dans le sens de l'écoulement, étant agencée de manière décalée sur le tube de mesure (2) de telle sorte que l'émetteur respectif émet en fonctionnement un signal ultrasonore dans le sens de l'écoulement ou à contresens de l'écoulement, et que le récepteur reçoit le signal ultrasonore émis par l'émetteur, le parcours du signal ultrasonique entre le troisième transducteur à ultrasons (5) et le quatrième transducteur à ultrasons (6) définissant un deuxième trajet de signal (8), le deuxième trajet de signal (8) définissant un deuxième plan de mesure (20),
le tube de mesure (2) du débitmètre à ultrasons (1) étant réalisé au moins en tant que partie du canal d'écoulement (12),
le tube de mesure (2) présentant au moins une surface de section transversale de tube de mesure (17) et un axe de tube de mesure (18),
le tube de mesure (2) présentant une première moitié de tube de mesure et une deuxième moitié de tube de mesure, le tube de mesure (2) présentant une modification de la forme et/ou de la taille de la surface de section transversale de tube de mesure (17) sur le parcours du premier trajet de signal (7) et du deuxième trajet de signal (8),
le premier transducteur à ultrasons (3) étant agencé sur la première moitié de tube de mesure et dans lequel le troisième transducteur à ultrasons (5) étant agencé sur la deuxième moitié de tube de mesure,
la première paire de transducteurs à ultrasons (3, 4) et la deuxième paire de transducteurs à ultrasons (5, 6) étant agencées sur le tube de mesure (2) de telle sorte que le premier plan de mesure et le deuxième plan de mesure ne sont pas alignés parallèlement l'un à l'autre, **caractérisé**
**en ce que** le premier trajet de signal (7) est réalisé sensiblement en forme de V et le deuxième trajet de signal (8) est réalisé sensiblement en forme de V,
**en ce que** les transducteurs à ultrasons sont agencés de telle sorte que la distance entre le premier plan de mesure et le deuxième plan de mesure se réduit au moins par sections sur le parcours de l'axe du tube de mesure, le premier plan de mesure et le deuxième plan de mesure ne se coupant pas dans la zone de l'étendue de mesure entre les transducteurs à ultrasons.

11. Utilisation selon la revendication 10, **caractérisée en ce que** le débitmètre à ultrasons (1) est conçu selon l'une des revendications 1 à 9.

12. Organe d'arrêt (11) doté d'un débitmètre à ultrasons (1), l'organe d'arrêt (11) présentant un canal d'écoulement (12) et un dispositif de blocage (13) agencé dans le canal d'écoulement (12), le dispositif de blocage (13) présentant un logement de corps de blocage et un corps de blocage mobile dans le logement de corps de blocage, dans lequel, par le déplacement du corps de blocage dans le logement de corps de blocage, la section transversale d'écoulement pour le milieu est modifiable dans le dispositif de blocage (13) et ainsi dans le canal d'écoulement (12), le canal d'écoulement (12), vu dans le sens de l'écoulement, présentant une zone d'entrée (15) en amont du dispositif de blocage (13),
**caractérisé**
**en ce que** le débitmètre à ultrasons (1) est réalisé selon l'une des revendications 1 à 9, le tube de mesure (2) du débitmètre à ultrasons (1) étant au moins réalisé en tant que partie du canal d'écoulement (12).
